# EUROPEAN PATENT APPLICATION

(11) **EP 4 290 826 A1**
(43) Date of publication of application: **13.12.2023**
(21) Application number: 22749479.6
(22) Date of filing: 19.01.2022
(51) Int. Cl.: H04L 67/00, G06F 3/0488, G09G 5/00, G09G 5/36, G09G 5/38

(54) **IMAGE DRAWING METHOD**

(30) Priority: 05.02.2021 JP 2021017152
(71) Applicant: Wacom Co., Ltd., Kazo-shi, Saitama 349-1148 (JP)
(72) Inventor: KATO Tatsunori, Kazo-shi Saitama 349-1148 (JP); ASADA Hajime, Kazo-shi Saitama 349-1148 (JP); TAKEBE Yoshifumi, Kazo-shi Saitama 349-1148 (JP); WATANABE Naoki, Kazo-shi Saitama 349-1148 (JP)
(74) Representative: Appelt, Christian W.
(86) International application number: PCT/JP2022/001733
(87) International publication number: WO 2022/168603

(57) **Abstract**

[Object] To prevent a deformation of an image based on a gesture from becoming excessive due to a processing delay.

[Solution] A computer (1) that is a remote computer sequentially detects the position of an indicator on a sensor surface at a predetermined sampling rate with the use of the input sensor, and sequentially transmits report data including the detected position to a host computer each time the position of the indicator is detected. A computer (2) that is the host computer detects a gesture on the basis of a series of pieces of report data received from the computer (1), generates a deformed image by imparting a deformation corresponding to the contents and amount that are indicated by the detected gesture, to the image, transmits the deformed image to the computer (1), and executes cancelling processing to cancel the deformation when the report data received from the computer (1) is an end report indicating that the indicator has been moved away from the sensor surface.

## Description

### Technical Field

The present invention relates to an image drawing method, and particularly to an image drawing method for deforming an image according to a gesture input by a user.

### Background Art

Remote desktop systems that display images on remote computers are becoming popular. Patent Document 1 discloses an example of a remote desktop system. This type of remote desktop system includes a host computer that generates an image for display on a display of a remote computer and the remote computer that displays an image supplied from the host computer.

### Prior Art Document

### Patent Document

Patent Document 1: Japanese Patent Laid-open No. 2016-189127

### SUMMARY OF INVENTION

### Technical Problems

In the meantime, a remote computer has an input sensor for allowing a user to input information with his or her finger or a pen, in some cases. When the remote computer having the input sensor detects that a position in the above-described image has been indicated by a finger or a pen, various types of data including the indicated position are transmitted to the host computer in the form of a report. On the basis of a series of reports thus received, the host computer detects a gesture (for example, pinch-out gesture, pinch-in gesture, drag gesture, rotation gesture, or the like) and imparts a deformation (for example, enlargement, reduction, movement, rotation, or the like) according to the detected gesture to the above-described image. When the image thus deformed is supplied from the host computer to the remote computer, the deformed image can visually be recognized even in the remote computer.

However, according to the processing described above, since the communication between the remote computer and the host computer is required after the user makes a gesture in the remote computer until the deformation based on the gesture is reflected on the image displayed on the remote computer, a considerable processing delay occurs. Due to the processing delay, the user may wrongly recognize that the gestures are insufficient, although enough gestures have actually been made, and may make extra gestures in some cases. This causes the image to be excessively deformed as if inertia worked, and thus, improvement has been needed.

Therefore, one of the objects of the present invention is to provide an image drawing method that can prevent a deformation of an image based on a gesture from becoming excessive due to a processing delay.

### Technical Solution

An image processing method according to a first aspect of the present invention is an image drawing method executed by a system including a host computer that executes an operating system and that generates an image to be displayed on a display of a remote computer, and the remote computer that includes an input sensor having a sensor surface and the display and that displays the image supplied from the host computer on the display. The method includes, by the remote computer, sequentially detecting a position of an indicator on the sensor surface at a predetermined sampling rate with use of the input sensor and sequentially transmitting report data including the detected position to the host computer each time the position of the indicator is detected. The method also includes, by the host computer, detecting a gesture on the basis of a series of pieces of report data received from the remote computer, generating a deformed image by imparting a deformation corresponding to contents and an amount that are indicated by the detected gesture, to the image or a previously-transmitted deformed image, and transmitting the deformed image to the remote computer. The method also includes, by the host computer, executing cancelling processing to cancel the deformation when the report data received from the remote computer is an end report indicating that the indicator has been moved away from the sensor surface.

An image processing method according to a second aspect of the present invention is an image drawing method executed by a system including a host computer that executes an operating system and that generates an image to be displayed on a display of a remote computer, and the remote computer that includes an input sensor having a sensor surface and the display and that displays the image supplied from the host computer on the display. The method includes, by the remote computer, sequentially detecting a position of an indicator on the sensor surface at a predetermined sampling rate with use of the input sensor and determining whether or not a movement of the indicator indicated by the detected position corresponds to a fixed gesture, generating report data for the input sensor and transmitting the report data to the host computer in a case where it is determined that the movement of the indicator does not correspond to the fixed gesture, and generating report data for a device of a different kind from the input sensor and transmitting the report data to the host computer in a case where it is determined that the movement of the indicator corresponds to the fixed gesture.

### Advantageous Effects

According to the first aspect of the present invention, since the deformation of the image is cancelled according to the end report, it is possible to prevent the deformation of the image based on the gesture from becoming excessive due to a processing delay.

According to the second aspect of the present invention, since the gesture is replaced with data having a small data size and is then transmitted, it is possible to prevent the deformation of the image based on the gesture from becoming excessive due to a processing delay.

### BRIEF DESCRIPTION OF DRAWINGS

[FIG. 1] FIG. 1 is a diagram for illustrating system configurations of computers 1 and 2 that execute an image processing method according to a first embodiment of the present invention.
[FIGS. 2A and 2B] FIG. 2A is a diagram for illustrating the format of report data R generated by an operating system 30 of the computer 1 for a pen P, and FIG. 2B is a diagram for illustrating the format of report data R generated by a processor 10 for a finger of a user.
[FIG. 3] FIG. 3 is a schematic block diagram for illustrating functional blocks of an operating system 30 of the computer 2.
[FIG. 4] FIG. 4 is a diagram for illustrating a processing flow of image deformation processing executed by a drawing application 31.
[FIG. 5] FIG. 5 is a diagram for illustrating a processing flow of number-of-cancelled-images setting processing performed by the drawing application 31 to set the number n of cancelled images in a memory 11.
[FIG. 6] FIG. 6 is a diagram for explaining the relation between a length of time T delay and the number n of cancelled images.
[FIG. 7] FIG. 7 is a diagram for illustrating a processing flow according to another example of the number-of-cancelled-images setting processing performed by the drawing application 31 to set the number n of cancelled images in the memory 11.
[FIG. 8] FIG. 8 is a diagram for illustrating a window image 40 that is an example of a test interface transmitted in Step S30 of FIG. 7.
[FIG. 9] FIG. 9 is a schematic block diagram for illustrating functional blocks of the operating system 30 of the computer 2 according to a modified example of the first embodiment of the present invention.
[FIG. 10] FIG. 10 is a diagram for illustrating a processing flow of report data transmission processing executed by the operating system 30 of the computer 1 according to a second embodiment of the present invention.
[FIGS. 11A and 11B] FIGS. 11A and 11B are diagrams each illustrating an example of a correspondence table that associates the types of gestures with commands registered in the drawing application 31.

### MODES FOR CARRYING OUT THE INVENTION

Hereinafter, embodiments of the present invention will be described in detail with reference to the attached drawings.

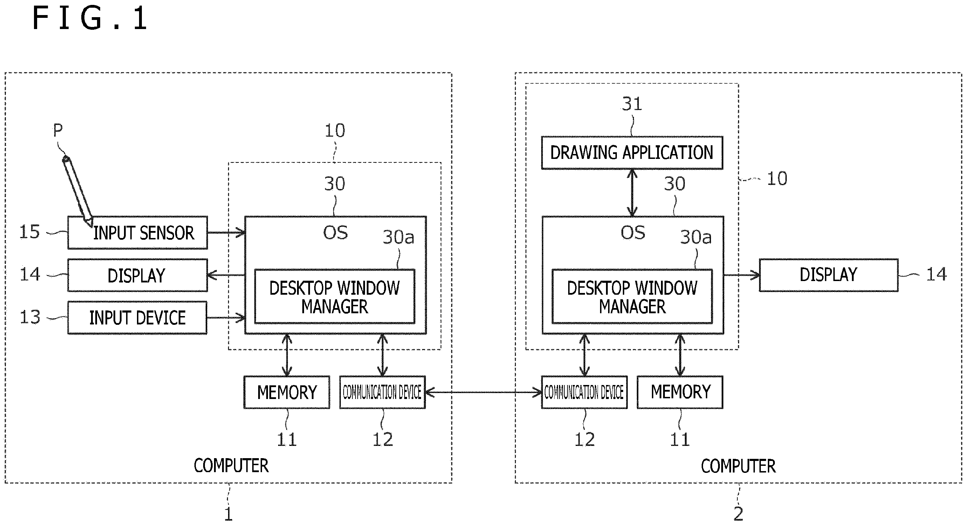

FIG. 1 is a diagram for illustrating system configurations of computers 1 and 2 that execute an image processing method according to a first embodiment of the present invention. Each of the computers 1 and 2 is, for example, an information processing device for personal use, such as a personal computer, a tablet terminal, or a smartphone. Although the configurations of the computers 1 and 2 may be the same, the computer 1 is used as a remote computer, and the computer 2 is used as a host computer in the present embodiment. FIG. 1 illustrates only the configurations necessary to function as the remote computer or the host computer.

The computer 1, which is a remote computer, includes a processor 10, a memory 11, a communication device 12, an input device 13, a display 14, and an input sensor 15, while the computer 2, which is a host computer, includes a processor 10, a memory 11, a communication device 12, and a display 14.

The processors 10 are central processing units of the computers 1 and 2, and are configured to read, from the memories 11, programs included in various device drivers and various applications in addition to the illustrated operating systems 30, and to execute the programs. The applications executed by the processor 10 of the computer 2 include a drawing application 31 having a function of generating an image. The image generated by the drawing application 31 includes an image to be deformed by a user. In addition, the operating system 30 includes a desktop window manager 30a that is a program for managing the drawing on the screen. The desktop window manager 30a plays a role of generating a video signal on the basis of the image generated by the drawing application 31 and supplying the image to its own display 14 and the other computer, and also plays a role of supplying a video signal supplied from the other computer to its own display 14.

The memory 11 is a storage device that stores the programs to be executed by the processor 10 and that also stores various types of data to be referred to by the processor 10. More specifically, the memory 11 includes a main storage device such as a DRAM (Dynamic Random Access Memory) and an auxiliary storage device such as a hard disk.

The communication device 12 is a device having a function of communicating with the other computer via the Internet or an ad hoc network. The operating system 30 transmits and receives various types of data to/from the operating system 30 of the other computer via the communication device 12.

The input device 13 is a device for accepting input made by the user on the operating system 30, and includes, for example, a keyboard and a mouse. When the user operates the input device 13, the input device 13 generates data indicating the operation contents and supplies the data to the operating system 30. The operating system 30 accepts the user input on the basis of the data thus supplied.

The display 14 is a device that visually outputs a video signal supplied from the operating system 30 (more specifically, the desktop window manager 30a). When the display 14 outputs the video signal in such a manner, the user can view the image generated by the drawing application 31.

The input sensor 15 is a device having a sensor surface and has a function of repeatedly and sequentially detecting the position of an indicator such as an illustrated pen P or a finger of the user on the sensor surface at a predetermined sampling rate and receiving various types of data from the pen P. The data received from the pen P includes a pen pressure detected by a pressure sensor built into the pen P. Although the specific method for detecting the pen P and the finger by the input sensor 15 is not limited to a particular method, for example, an active capacitive method or an electromagnetic induction method can suitably be used for the detection of the pen P, and a capacitance method can suitably be used for the detection of the finger. In the following, the explanation will be continued on the assumption that the detection of the pen P is performed by the active capacitive method and the detection of the finger is performed by the capacitance method.

The sensor surface of the input sensor 15 also typically serves as the display surface of the display 14. In this case, the user can operate the image displayed on the display 14, by using the indicator, as if the user directly touched and operated the image. However, the sensor surface of the input sensor 15 may be provided separately from the display surface of the display 14 as in the case of, for example, a touchpad of a notebook personal computer or an external digitizer.

Directly below the sensor surface, a plurality of x electrodes and a plurality of y electrodes are arranged. The x electrodes each extend in a y direction and are arranged at equal intervals in an x direction. The y electrodes each extend in the x direction and are arranged at equal intervals in the y direction. By using these electrodes, the input sensor 15 detects the position of the indicator and receives data from the pen P. Hereinafter, processing executed by the input sensor 15 will be described in detail separately for a case where the detection target is the pen P and a case where the detection target is the finger.

First, the case where the detection target is the pen P will be described. The input sensor 15 is configured to periodically transmit a predetermined uplink signal by using either the plurality of x electrodes or the plurality of y electrodes as transmission electrodes. The uplink signal includes a local ID (Identification) that is to be assigned to the undetected pen P.

When the pen P which is yet to be paired with the input sensor 15 receives the uplink signal through the capacitive coupling with the above-described x electrodes or y electrodes, the pen P extracts and acquires the local ID therefrom, and transmits a downlink signal at a timing corresponding to the reception timing of the uplink signal. The downlink signal transmitted by the pen P at this stage consists of only a position signal that is an unmodulated carrier signal. The input sensor 15 receives the position signal at each of the plurality of x electrodes and y electrodes in the input sensor 15, detects the position of the pen P on the basis of the reception intensity at each electrode (global scan), and executes pairing with the pen P by using the succeeding uplink signals.

The pen P which has established pairing with the input sensor 15 performs processing of transmitting the downlink signal according to the uplink signal periodically received from the input sensor 15. Here, the downlink signal includes the above-described position signal and a data signal which is a carrier signal modulated by transmission data, such as a pen pressure. The input sensor 15 updates the position of the pen P by receiving the position signal thus transmitted, at each of a predetermined number of x electrodes and y electrodes in the vicinity of the previously detected position (local scan), and acquires the data transmitted by the pen P, by receiving the data signal. Then, the updated position and acquired data are supplied to the processor 10 together with the local ID assigned to the pen P. Accordingly, the operating system 30 can sequentially acquire the position and the data such as the pen pressure for each pen P.

Next, the case where the detection target is the finger of the user will be described. The input sensor 15 is configured to supply a predetermined finger detection signal to either the plurality of x electrodes or the plurality of y electrodes, and to periodically execute processing of receiving the signal at the other electrodes. When the finger is close to the intersection of the x electrode and the y electrode, the reception intensity of the finger detection signal received by the input sensor 15 becomes smaller through the capacitance generated between the finger and the x electrode and the y electrode. The input sensor 15 periodically detects the position of the finger of the user by detecting the change in reception intensity.

Here, the input sensor 15 is configured to execute tracking processing to track the detected position of the finger. Specifically, the input sensor 15 is configured to, when newly detecting the position of the finger, impart a finger ID to the detected position and supply the ID to the processor 10 together with the detected position. In the case where the finger is detected at the next timing at a position within a predetermined range with respect to the previously detected position, the same finger ID is imparted to the detected position and supplied to the processor 10 together with the detected position. Accordingly, even in the case where the positions of a plurality of fingers are detected, the operating system 30 can individually acquire the trajectory of each finger in reference to the finger ID.

When the position and other data (including the data received from the pen P, the local ID, and the finger ID) are supplied from the input sensor 15 of the computer 1 as described above, the operating system 30 of the computer 1 performs processing of generating report data including the supplied position and data and transmitting the report data to the computer 2 via the communication device 12. Accordingly, the contents of the operation performed by the user on the sensor surface of the input sensor 15 of the computer 1 are supplied to the operating system 30 of the computer 2.

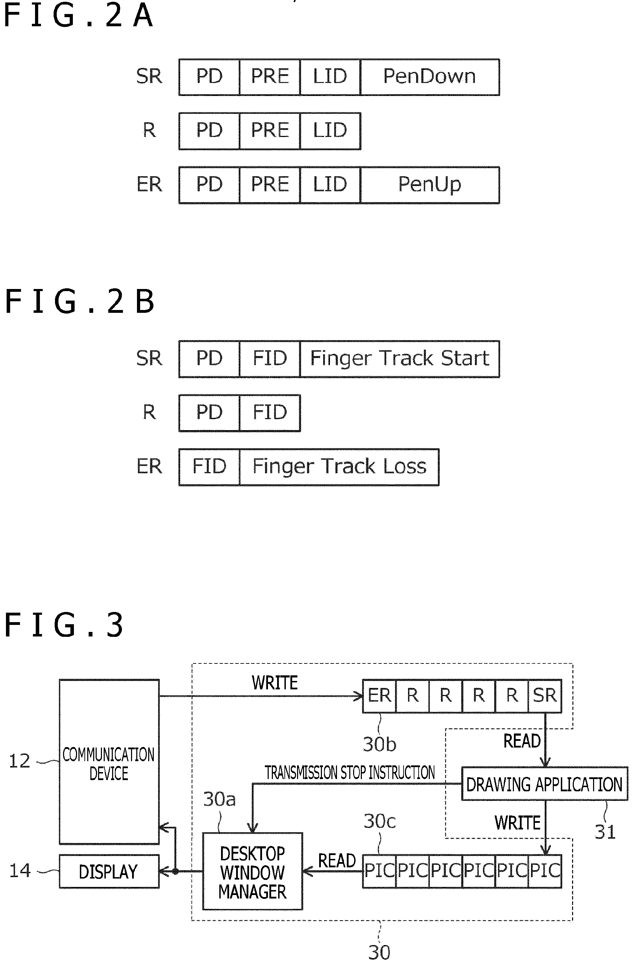

FIG. 2A is a diagram for illustrating the format of report data R generated by the operating system 30 of the computer 1 for the pen P. As illustrated in the drawing, the report data R generated for the pen P includes position data PD indicating the detected position, pen pressure data PRE indicating the pen pressure received from the pen P, and the above-described local ID (LID). The pen pressure data PRE becomes a value larger than 0 in the case where the pen P comes into contact with the sensor surface, and becomes 0 in the case where the pen P does not come into contact with the sensor surface.

A start report SR generated for the pen P is report data R including, in addition to the position data PD, the pen pressure data PRE, and the local ID, pen-down information PenDown indicating that the pen P has come into contact with the sensor surface. The processor 10 is configured to generate the start report SR in response to a change in pen pressure data PRE from 0 to a value larger than 0.

In addition, an end report ER generated for the pen P is report data R including, in addition to the position data PD, the pen pressure data PRE, and the local ID, pen-up information PenUp indicating that the pen P has been moved away from the sensor surface. The processor 10 is configured to generate the end report ER in response to a change in pen pressure data PRE from a value larger than 0 to 0.

FIG. 2B is a diagram for illustrating the format of report data R generated by the processor 10 for the finger of the user. As illustrated in the drawing, the report data R generated for the pen P includes the position data PD indicating the detected position and the above-described finger ID (FID).

A start report SR generated for the finger includes, in addition to the position data PD and the finger ID, track start information Finger Track Start indicating that tracking of the finger has started. The processor 10 is configured to generate the start report SR in response to the start of new finger tracking processing by the input sensor 15.

An end report ER generated for the finger includes, in addition to the finger ID, loss information Finger Track Loss indicating that the movement of the finger tracked as a series of positions by the tracking processing has not been detected. The position data PD is not included in the end report ER generated for the finger. The processor 10 is configured to generate the end report ER in response to the completion of the tracking processing of the finger by the input sensor 15.

Return to FIG. 1. The operations performed by the user on the sensor surface of the input sensor 15 can include various gestures such as a pinch-out gesture, a pinch-in gesture, a drag gesture, a rotation gesture, and a swipe gesture. It should be noted that the pinch-out gesture is an operation of enlarging the displayed image by expanding the space between two fingers touching the sensor surface, the pinch-in gesture is an operation of reducing the size of the displayed image by narrowing the space between two fingers touching the sensor surface, the drag gesture is an operation of moving the displayed image by sliding the indicator on the sensor surface, the rotation gesture is an operation of rotating the displayed image by sliding the indicator on the sensor surface, and the swipe gesture is an operation of scrolling the screen by sliding the indicator on the sensor surface. Detection of these gestures is executed by the operating system 30 or the drawing application 31 of the computer 2 on the basis of a series of pieces of report data R received from the computer 1.

The drawing application 31 has a function of generating a deformed image by imparting, to the generated image, a deformation corresponding to the contents and amount that are indicated by the gesture detected as described above. The deformations thus imparted to the image include an enlargement, a reduction, a movement, rotation, scrolling, and the like. The deformed image generated by the drawing application 31 is supplied to the computer 1 as a video signal through the desktop window manager 30a of the computer 2. The desktop window manager 30a of the computer 1 updates the display of the display 14 of the computer 1 with the video signal thus supplied. Accordingly, the user of the computer 1 can visually recognize the deformed image generated as a result of the operation made by himself/herself. In addition, the desktop window manager 30a of the computer 2 also supplies the video signal of the deformed image to its own display 14. Accordingly, the user of the computer 2 can also visually recognize the deformed image in a similar manner to the user of the computer 1.

FIG. 3 is a schematic block diagram for illustrating functional blocks of the operating system 30 of the computer 2. As illustrated in the drawing, the operating system 30 functionally includes, in addition to the above-described desktop window manager 30a, a reception buffer 30b and a transmission buffer 30c each of which is a queue in the FIFO (First In First Out) format. The report data R (including the start report SR and the end report ER) received from the computer 1 is written into the reception buffer 30b through the communication device 12.

The drawing application 31 first generates an image PIC displayed on the display 14 of each of the computers 1 and 2 and writes the image PIC into the end of the transmission buffer 30c. Thereafter, when the report data R indicating the result of the operation by the user of the computer 1 is written into the reception buffer 30b, the report data R is read in order from the oldest one, and the gesture is detected on the basis of a series of pieces of report data R including the past report data R read so far. Then, the latest image PIC is deformed on the basis of the detected gesture and the image PIC indicating the result is written into the end of the transmission buffer 30c.

The desktop window manager 30a performs processing of sequentially reading the image PIC from the transmission buffer 30c, generating a video signal on the basis of the read image PIC each time, and supplying the video signal to the communication device 12 and the display 14. The communication device 12 transmits the supplied video signal to the computer 1. Although not illustrated in the drawing, the desktop window manager 30a of the computer 1, which has received the video signal thus transmitted, updates the display of the display 14 of the computer 1 with the received video signal. Accordingly, the user of the computer 1 can visually recognize a state in which the result of the operation is reflected on the image PIC. In addition, the display 14 of the computer 2, which has been supplied with the video signal from the desktop window manager 30a, updates the displayed image with the supplied video signal. Accordingly, the user of the computer 2 can also visually recognize a state in which the result of the operation performed by the other user on the computer 1 is reflected on the image PIC.

Here, according to the above-described processing, since the communication between the computer 1 and the computer 2 is required after the user makes a gesture on the input sensor 15 of the computer 1 until the deformation based on the gesture is reflected on the image displayed on the display 14 of the computer 1, a considerable processing delay occurs. Due to the processing delay, the user may wrongly recognize that the gestures are insufficient, although enough gestures have actually been made, and may make extra gestures in some cases. This causes the image to be excessively deformed as if inertia worked.

Accordingly, the drawing application 31 according to the present embodiment executes processing of cancelling the deformation of the image when the report data R received from the computer 1 is the end report ER. Specifically, as illustrated in FIG. 3, the desktop window manager 30a is instructed to stop transmission of at least some of one or more images PIC accumulated in the transmission buffer 30c. The desktop window manager 30a having received the instruction stops the transmission by discarding the image PIC as a target of the transmission stop from the transmission buffer 30c. Accordingly, the deformations based on the last several gestures among a series of gestures can be cancelled, and thus, it is possible to prevent the image from being excessively deformed.

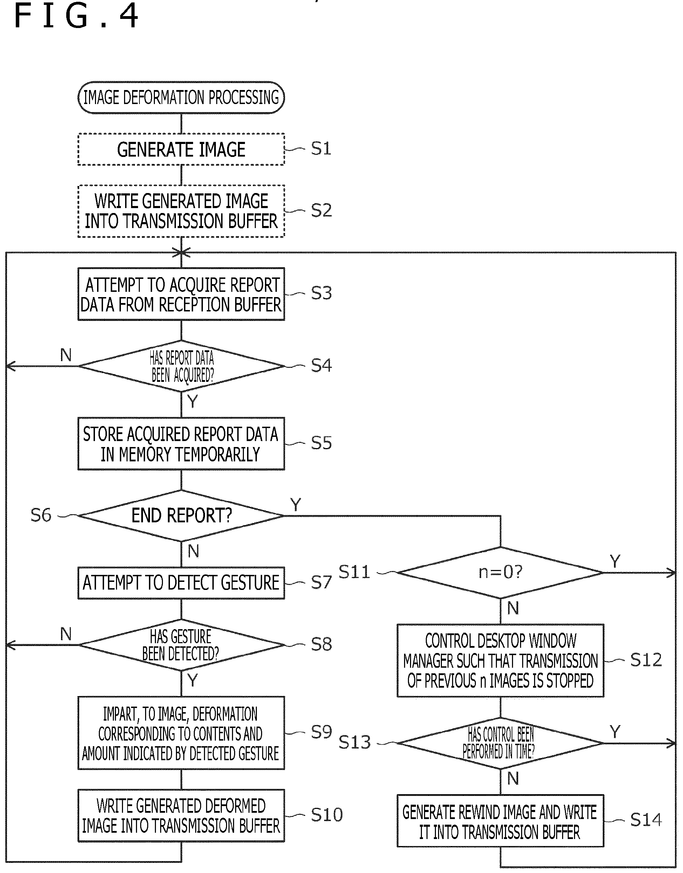

FIG. 4 is a diagram for illustrating a processing flow of image deformation processing executed by the drawing application 31. Hereinafter, processing of cancelling the deformation of the image will be described in more detail with reference to FIG. 4 as well.

The drawing application 31 first generates an image for display on the displays 14 of the computers 1 and 2 as a premise (Step S1) and writes the generated image into the transmission buffer 30c (Step S2). Thereafter, the drawing application 31 attempts to acquire the report data R from the reception buffer 30b (Step S3), and determines whether or not the report data R has been acquired (Step S4). In the case where the drawing application 31 determines in Step S4 that the report data R has not been acquired, it repeats Step S3. On the other hand, in the case where the drawing application 31 determines that the report data R has been acquired, the acquired report data R is temporarily stored in the memory 11 (Step S5). Then, the drawing application 31 determines whether or not the acquired report data R is the end report ER (Step S6).

In the case where the drawing application 31 determines in Step S6 that the acquired report data R is not the end report ER, it attempts to detect a gesture on the basis of a series of pieces of report data R acquired so far (Step S7), and determines whether or not the gesture has been detected (Step S8). As a result, in the case where the gesture has not been detected, the flow returns to Step S3 to repeat the processing. On the other hand, in the case where the gesture has been detected, the deformation corresponding to the contents and amount that are indicated by the detected gesture is imparted to the image (Step S9). The image to be deformed here is the image that the drawing application 31 has previously written into the transmission buffer 30c. The drawing application 31 which has generated the deformed image in Step S9 writes the generated deformed image into the transmission buffer 30c (Step 10) and returns to Step S3.

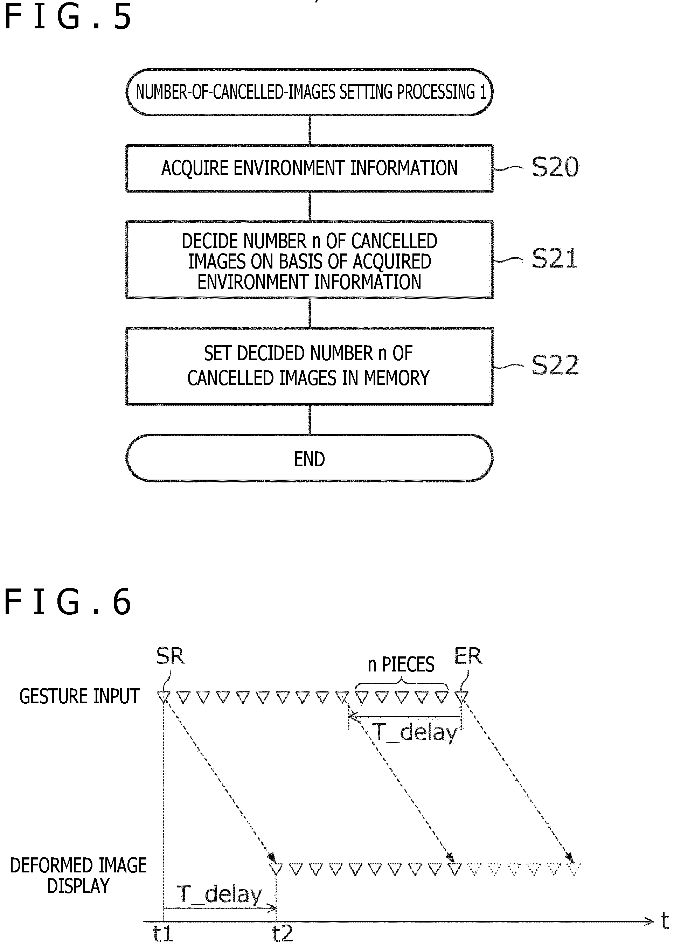

The drawing application 31 which has determined in Step S6 that the acquired report data R is the end report ER refers to the number n of cancelled images preliminarily set in the memory 11 and determines whether or not n = 0 is satisfied (Step S11). The details of the number n of cancelled images will be described later with reference to FIG. 5 to FIG. 8.

The drawing application 31 which has determined in Step S11 that n = 0 is satisfied returns the processing to Step S3. In this case, the processing of cancelling the deformation of the image is not performed. On the other hand, the drawing application 31 which has determined in Step S11 that n = 0 is not satisfied controls the desktop window manager 30a to stop the transmission of previous n images (Step S12). Accordingly, the images corresponding to n pieces of report data R ahead of the end report ER are deleted from the transmission buffer 30c and are not reflected on the displays 14 of the computers 1 and 2.

Then, the drawing application 31 determines whether or not the control of the desktop window manager 30a has been performed in time (Step S13). That is, if the value of n is large, there is a possibility that some of the previous n images have already been transmitted at the time of executing Step S11. In such a case, the drawing application 31 determines that the control of the desktop window manager 30a has not been performed in time. The drawing application 31 which has determined in Step S13 that the control of the desktop window manager 30a has been performed in time returns the processing to Step S3. On the other hand, the drawing application 31 which has determined in Step S13 that the control of the desktop window manager 30a has not been performed in time regenerates the (n+1)-th previous image (rewind image to be displayed on the display 14 in the case where no gesture is made) on the basis of the series of pieces of report data R stored in the memory 11 and writes the image into the transmission buffer 30c (Step S14). Accordingly, the image displayed on the display 14 is excessively deformed once, but immediately after that, it is possible to return to the image that has not excessively been deformed.

FIG. 5 is a diagram for illustrating a processing flow of number-of-cancelled-images setting processing performed by the drawing application 31 to set the above-described number n of cancelled images in the memory 11. The drawing application 31 which has started this processing first acquires environment information as illustrated in the drawing (Step S20).

The environment information is information indicating the environment of the computer 1 and includes, for example, either the size of the display 14 of the computer 1 or a length of time T_delay required to display an image corresponding to the position of the indicator on the display 14 of the computer 1 after the computer 1 detects the position of the indicator. The drawing application 31 only needs to acquire the size of the display 14 of the computer 1 by receiving the information indicating the size of the display 14 from the computer 1. In addition, the drawing application 31 only needs to acquire the length of time T delay by causing the operating system 30 of the computer 1 to measure the length of time T_delay and receiving the result from the computer 1. The length of time T_delay will be described in detail later with reference to FIG. 6.

Next, the drawing application 31 decides the number n of cancelled images on the basis of the acquired environment information (Step S21). In one example, in the case where the size of the display 14 of the computer 1 is small enough, n = 0 is set (that is, the processing of cancelling the deformation of the image is not performed), and as the size of the display 14 becomes larger, n may be increased. Since the excessive deformation of the image is more noticeable as the size of the display 14 on which it is displayed becomes larger, it is possible to keep the excessive deformation of the image to a less noticeable range by deciding the number n of cancelled images in such a manner as described above.

FIG. 6 is a diagram for explaining the relation between the length of time T_delay and the number n of cancelled images. As illustrated in the drawing, a delay corresponding to the length of time T_delay occurs during a period of time from the time t1 when the user inputs the gesture in the computer 1 to the time t2 when the corresponding deformed image is displayed on the display 14 of the computer 1. Hence, the drawing application 31 only needs to decide the number n of cancelled images such that the gestures corresponding to pieces of report data R ahead of the end report ER that correspond to the length of time T _delay are cancelled, as illustrated in FIG. 6. By deciding the number n of cancelled images in such a manner, it becomes possible to execute an optimal amount of cancellation according to the length of time T_delay.

Return to FIG. 5. The drawing application 31 which has decided the number n of cancelled images sets the decided number n of cancelled images in the memory 11 (Step S22). Thereafter, in Steps S11 and S12 of FIG. 4, the drawing application 31 refers to the number n of cancelled images set in Step S22.

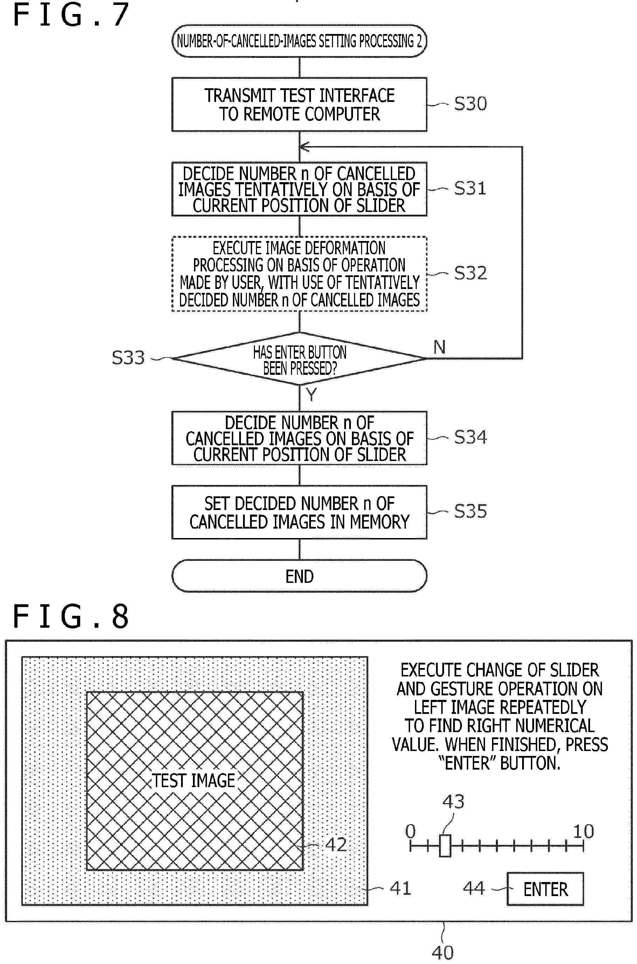

FIG. 7 is a diagram for illustrating a processing flow according to another example of the number-of-cancelled-images setting processing performed by the drawing application 31 to set the number n of cancelled images in the memory 11. The drawing application 31 which has started this processing first transmits a test interface to the computer 1 as illustrated in the drawing (Step S30).

FIG. 8 is a diagram for illustrating a window image 40 that is an example of the test interface transmitted in Step S30. As illustrated in the drawing, the window image 40 has a drawing area 41, a test image 42 arranged in the drawing area 41, a slider 43, and an enter button 44. The test image 42 is an image that can be deformed according to the gesture made by the user. For example, when the user pinches out on the test image 42, the test image 42 is magnified. The slider 43 is a component for adjusting the number n of cancelled images on the basis of an operation made by the user, and is configured such that any integer of 0 to a predetermined numerical value (10 in the example of FIG. 8) can be selected. Selecting 0 on the slider 43 means that the processing of cancelling the deformation of the image is not executed. In addition, selecting a value equal to or larger than 1 on the slider 43 means that the degree of the processing of cancelling the deformation of the image is set. The enter button 44 is a button for fixing the number n of cancelled images to the value set on the slider 43.

Return to FIG. 7. The drawing application 31 tentatively decides the number n of cancelled images on the basis of the current position of the slider 43 (Step S31). Then, with the use of the tentatively decided number n of cancelled images, the image deformation processing is executed on the basis of the operation made by the user (Step S32). Specifically, the processing in Step S32 is the image deformation processing illustrated in FIG. 4, and is executed in the background of the processing illustrated in FIG. 7. The drawing application 31 monitors the state of the enter button 44 while executing Steps S31 and S32 (Step S33). Then, when the enter button 44 is pressed (clicked or tapped), processing of deciding the number n of cancelled images on the basis of the current position of the slider 43 is performed (Step S34), and the decided number n of cancelled images is set in the memory 11 (Step S35). By the above-described processing, the user of the computer 1 can select the optimal value of the number n of cancelled images while checking the actual deformation status.

As described above, according to the image processing method of the present embodiment, since the deformation of the image is cancelled according to the end report ER, it is possible to prevent the deformation of the image based on the gesture from becoming excessive due to a processing delay.

In addition, since the number n of cancelled images is set on the basis of the size of the display 14 of the computer 1, the length of time T_delay required to display the image corresponding to the position of the indicator on the display 14 of the computer 1 after the computer 1 detects the position of the indicator, and the like, it is possible to optimize the number n of cancelled images according to the environment.

Further, since the test interface including the test image that can be deformed according to the gesture made by the user and the slider for selecting the number n of cancelled images is displayed on the display of the computer 1, the user of the computer 1 can select the optimal value of the number n of cancelled images while checking the actual deformation status.

It should be noted that, in the present embodiment described above, the drawing application 31 deforms the image. However, the desktop window manager 30a may deform the image.

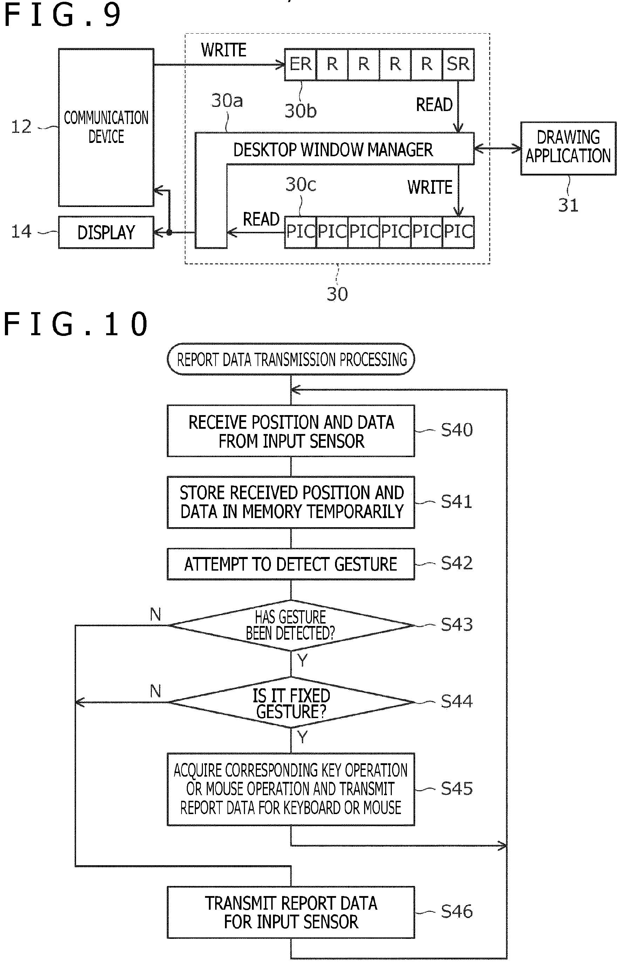

FIG. 9 is a schematic block diagram for illustrating functional blocks of the operating system 30 of the computer 2 according to a modified example of the present embodiment. According to the present modified example, an image PIC generated by the drawing application 31 is written into the transmission buffer 30c by the desktop window manager 30a. Then, the desktop window manager 30a sequentially reads the report data R from the reception buffer 30b, detects a gesture on the basis of a series of pieces of report data R including the past report data R read so far, deforms the latest image PIC on the basis of the detected gesture, and writes the image PIC indicating the result to the end of transmission buffer 30c. The processing of cancelling the deformation of the image in this case is executed as internal processing of the desktop window manager 30a. Even in this way, the image PIC reflecting the result of the operation performed by the user can be displayed on the displays 14 of the computers 1 and 2, and the image PIC can be prevented from being excessively deformed.

In addition, although the example of setting the number n of cancelled images on the basis of the size of the display 14 of the computer 1 has been described in the present embodiment, the number n of cancelled images may be set on the basis of the moving speed of the indicator in the computer 1. It should be noted that the moving speed is the distance by which the indicator moves per unit time, and the unit of distance may be such a length as a sensor meter or may be the number of pixels. In this case, it is preferable that the drawing application 31 causes the computer 1 to acquire the average value of the moving speed of the indicator, and as the acquired average value is smaller, the number n of cancelled images is set smaller. As the moving speed of the indicator is smaller, the excessive deformation of the image becomes less noticeable, and thus, it is possible to cancel the image deformation only by an optimal amount even in such a manner as described above.

Next, an image processing method according to a second embodiment of the present invention will be described. The system configurations of the computers 1 and 2 executing the image processing method according to the present embodiment are similar to those in FIG. 1. The image processing method according to the present embodiment differs from the image processing method according to the first embodiment in that, instead of executing the processing of cancelling the image deformation in the computer 2, the report data R transmitted from the computer 1 is replaced with data having a small data size (specifically, report data for the keyboard or mouse) and is then transmitted. Hereinafter, the explanation will be made by focusing on the differences.

FIG. 10 is a diagram for illustrating a processing flow of report data transmission processing executed by the operating system 30 of the computer 1. As illustrated in the drawing, when the operating system 30 of the computer 1 according to the present embodiment receives the position and data from an input sensor S40 (Step S40), the received position and data are temporarily stored in the memory 11 (Step S41). Then, on the basis of a series of positions and data received so far, the operating system 30 attempts to detect a gesture (Step S42), and determines whether or not the gesture has been detected (Step S43). The processing of Steps S41 to S43 is nothing other than the processing of Steps S5, S7, and S8 in FIG. 4 executed in the computer 1.

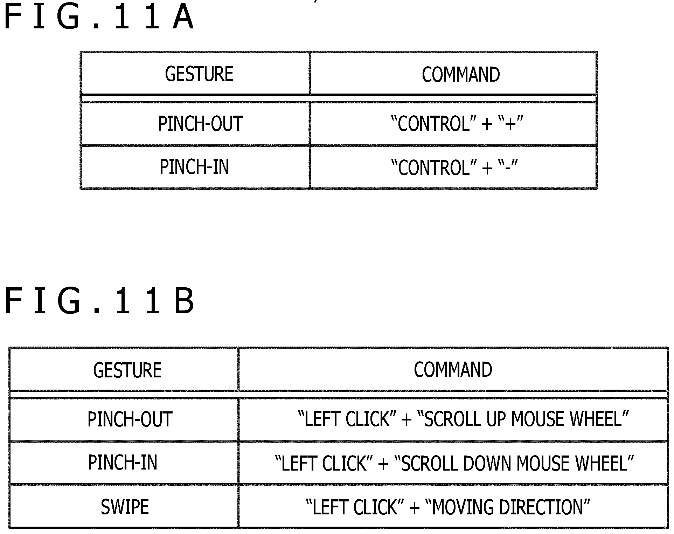

In the case where the operating system 30 of the computer 1 determines in Step S43 that the gesture has been detected, it determines whether or not the detected gesture corresponds to a fixed gesture stored in a correspondence table to be described later (Step S44). The details of the correspondence table will be described later with reference to FIGS. 11A and 11B. The operating system 30 of the computer 1 which has determined in Step S44 that the detected gesture corresponds to the fixed gesture acquires a key operation and a mouse operation corresponding to the detected gesture, from the correspondence table, and transmits report data for the keyboard or mouse (report data for a device of a different kind from the input sensor 15) indicating the acquired operation to the computer 2 (Step S46). On the other hand, in the case where the operating system 30 of the computer 1 determines in Step S43 that the gesture has not been detected and where the operating system 30 determines in Step S44 that the detected gesture does not correspond to the fixed gesture, it transmits report data for the input sensor 15 to the computer 2 (Step S47). The report data transmitted in Step S47 is the same as the report data described in the first embodiment.

Each of FIGS. 11A and 11B is a diagram for illustrating an example of the correspondence table that associates the types of gestures with commands registered in the drawing application 31. The command includes either a key operation or a mouse operation, or a combination thereof. The operating system 30 of the computer 1 acquires the key operation or mouse operation corresponding to the detected gesture, by referring to the correspondence table in Step S45 of FIG. 10.

Each of the examples of the correspondence table will specifically be described below. In the example of FIG. 11A first, the simultaneous pressing of the "control" key and the "+" key is associated with the pinch-out gesture, and the simultaneous pressing of the "control" key and the "-" key is associated with the pinch-in gesture. Therefore, in the case where the gesture detected in Step S42 is, for example, the pinch-out gesture, the operating system 30 of the computer 1 acquires in Step S44 the simultaneous pressing of the "control" key and the "+" key as the key operation or mouse operation corresponding to the detected gesture, and transmits in Step S46 report data indicating the simultaneous pressing of the "control" key and the "+" key.

Next, in the example of FIG. 11B, a combination of "left click" and "scroll up mouse wheel" is associated with the pinch-out gesture, a combination of "left click" and "scroll down mouse wheel" is associated with the pinch-in gesture, and a combination of "left click" and "moving direction" is associated with the swipe gesture. Thus, in the case where the gesture detected in Step S42 is, for example, the swipe gesture, the operating system 30 of the computer 1 acquires in Step S44 a combination of "left click" and "moving direction" as the key operation or mouse operation corresponding to the detected gesture, and transmits in Step S46 report data indicating "left click" and "moving direction." It should be noted that specific details of the "moving direction" may be decided on the basis of the moving direction of the indicator indicated by a series of positions (positions of the pen P or finger) input from the input sensor 15.

As described above, according to the image processing method of the present embodiment, the gesture executed by the pen P or finger can be replaced with data having a small data size (specifically, report data for the keyboard or mouse) and transmitted. Since the processing delay can thus be reduced, it is possible to prevent the deformation of the image based on the gesture from becoming excessive due to the processing delay, similarly to the first embodiment.

Although the preferred embodiments of the present invention have been described above, it is obvious that the present invention is not limited to such embodiments at all, and the present invention can be carried out in various forms without departing from the gist thereof.

### DESCRIPTION OF REFERENCE SYMBOLS

1, 2: Computer
10: Processor
11: Memory
12: Communication device
13: Input device
14: Display
15: Input sensor
30: Operating system
30a: Desktop window manager
30b: Reception buffer
30c: Transmission buffer
31: Drawing application
40: Window image (test interface)
41: Drawing area
42: Test Image
43: Slider
44: Enter button
ER: End report
FID: Finger ID
Finger Track Start: Track start information
Finger Track Loss: Loss information
LID: Local ID
P: Pen
PD: Position data
PenDown: Pen-down information
PenUp: Pen-up information
PIC: Image
PRE: Pen pressure data
R: Report data
SR: Start report

## Claims

1. An image drawing method executed by a system,
the system including
a host computer that executes an operating system and that generates an image to be displayed on a display of a remote computer, and
the remote computer that includes an input sensor having a sensor surface and the display and that displays the image supplied from the host computer on the display,
the image drawing method comprising:
by the remote computer, sequentially detecting a position of an indicator on the sensor surface at a predetermined sampling rate with use of the input sensor and sequentially transmitting report data including the detected position to the host computer each time the position of the indicator is detected;
by the host computer, detecting a gesture on a basis of a series of pieces of report data received from the remote computer, generating a deformed image by imparting a deformation corresponding to contents and an amount that are indicated by the detected gesture, to the image or a previously-transmitted deformed image, and transmitting the deformed image to the remote computer; and
by the host computer, executing cancelling processing to cancel the deformation when the report data received from the remote computer is an end report indicating that the indicator has been moved away from the sensor surface.

2. The image drawing method according to claim 1,
wherein the cancelling processing is processing of cancelling a deformation corresponding to pieces of report data ahead of the end report, the pieces of report data corresponding to a length of time required to display the image corresponding to the position of the indicator on the display after the remote computer detects the position of the indicator.

3. The image drawing method according to claim 1,
wherein the host computer includes
a transmission buffer that accumulates one or more deformed images generated, and
a transmission unit that sequentially reads and transmits the one or more deformed images accumulated in the transmission buffer, and
the cancelling processing is processing of stopping transmission of at least some of the one or more deformed images accumulated in the transmission buffer, when the report data received from the remote computer is the end report indicating that the indicator has been moved away from the sensor surface.

4. The image drawing method according to claim 3,
wherein the processing of stopping transmission of at least some of the one or more deformed images accumulated in the transmission buffer is processing of discarding, from the transmission buffer, the deformed images whose transmission is to be stopped.

5. The image drawing method according to any one of claims 1 to 4,
wherein the cancelling processing includes processing of, in a case where the gesture has not been made, generating a rewind image to be displayed on the display and transmitting the rewind image to the remote computer.

6. The image drawing method according to any one of claims 1 to 5,
wherein the cancelling processing is processing of cancelling a deformation corresponding to a predetermined number of pieces of report data ahead of the end report, and
the predetermined number is preliminarily set in a memory of the host computer.

7. The image drawing method according to claim 6,
wherein the predetermined number is decided on a basis of environment information indicating an environment of the remote computer.

8. The image drawing method according to any one of claims 1 to 7,
wherein the host computer is configured to be able to set whether or not to execute the cancelling processing, according to the environment information indicating the environment of the remote computer.

9. The image drawing method according to claim 7 or 8,
wherein the environment information includes either a size of the display or a length of time required to display the image corresponding to the position of the indicator on the display after the remote computer detects the position of the indicator.

10. The image drawing method according to claims 1 to 8,
wherein the host computer causes the display to display a test interface for the cancelling processing,
the test interface includes a test image to be deformed according to the gesture and a component for setting presence or absence of the cancelling processing, and
the host computer switches whether or not to execute the cancelling processing, according to the setting in the component.

11. The image drawing method according to claim 10,
wherein the component includes a part configured to be able to set a degree of the cancelling processing, and
the host computer changes the degree of the cancelling processing according to the setting in the component.

12. The image drawing method according to any one of claims 1 to 11,
wherein the gesture is any of a pinch-out gesture, a pinch-in gesture, a drag gesture, or a rotation gesture.

13. The image drawing method according to any one of claims 1 to 12,
wherein the deformation is any of an enlargement, a reduction, a movement, or a rotation.

14. The image drawing method according to any one of claims 1 to 13,
wherein the deformation is executed by either an application operating on the operating system or a desktop window manager included in the operating system.

15. The image drawing method according to any one of claims 1 to 14,
wherein the indicator is a finger,
the remote computer is configured to execute tracking processing to track a position of the finger, and
the end report is data including information indicating that a movement of the finger tracked as a series of positions by the tracking processing has not been detected.

16. The image drawing method according to any one of claims 1 to 14,
wherein the indicator is a pen configured to be able to detect a pen pressure and transmit the pen pressure to the remote computer, and
the end report is data including pen-up information indicating that the pen pressure has changed from a value larger than 0 to 0.

17. An image drawing method executed by a system
the system including
a host computer that executes an operating system and that generates an image to be displayed on a display of a remote computer, and
the remote computer that includes an input sensor having a sensor surface and the display and that displays the image supplied from the host computer on the display,
the image drawing method comprising:
by the remote computer, sequentially detecting a position of an indicator on the sensor surface at a predetermined sampling rate with use of the input sensor and determining whether or not a movement of the indicator indicated by the detected position corresponds to a fixed gesture;
generating report data for the input sensor and transmitting the report data to the host computer in a case where it is determined that the movement of the indicator does not correspond to the fixed gesture; and
generating report data for a device of a different kind from the input sensor and transmitting the report data to the host computer in a case where it is determined that the movement of the indicator corresponds to the fixed gesture.

18. The image drawing method according to claim 17,
wherein the gesture is any of a pinch-out gesture, a pinch-in gesture, or a swipe gesture,
the device of a different kind is a mouse, and
the report data for the device of a different kind includes at least one of a wheel scroll and a click of the mouse.

19. The image drawing method according to claim 17 or 18,
wherein the remote computer preliminarily stores a table that associates a type of the gesture with a command registered in an application executed by the host computer, and
the fixed gesture is the gesture of the type stored in the table.
